(19) Europäisches Patentamt
European Patent Office
Office européen des brevets

(11) **EP 1 091 290 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
*G06F 9/315* (2006.01)    *G06F 9/312* (2006.01)

(21) Anmeldenummer: **00121293.5**

(22) Anmeldetag: **06.10.2000**

(54) **Prozessorsystem mit Speicher- oder Ladebebefehl mit Trenninformation**

Processor system with Store or Load instruction having splitting information

Système de processeur avec instruction de stockage ou de chargement avec information de partage

(84) Benannte Vertragsstaaten:
**AT BE CH CY DE DK ES FI FR GB GR IE IT LI LU MC NL PT SE**

(30) Priorität: **06.10.1999 DE 19948100**

(43) Veröffentlichungstag der Anmeldung:
**11.04.2001 Patentblatt 2001/15**

(73) Patentinhaber: **Infineon Technologies AG**
**81669 München (DE)**

(72) Erfinder: **Xiaoning, Nie**
**81543 München (DE)**

(74) Vertreter: **Reinhard - Skuhra - Weise & Partner**
**Postfach 44 01 51**
**80750 München (DE)**

(56) Entgegenhaltungen:
**EP-A- 0 652 508**     **JP-A- 11 184 750**
**US-A- 3 360 780**

- **"PARALLEL LONG MOVE INSTRUCTION" IBM TECHNICAL DISCLOSURE BULLETIN, IBM CORP. NEW YORK, US, Bd. 33, Nr. 10A, 1. März 1991 (1991-03-01), Seiten 21-22, XP000109942 ISSN: 0018-8689**
- **"CONCURRENT REGISTER LOADING FROM MEMORY AND REGISTER STORING TO I/O" IBM TECHNICAL DISCLOSURE BULLETIN, IBM CORP. NEW YORK, US, Bd. 36, Nr. 1, 1993, Seiten 395-396, XP000333891 ISSN: 0018-8689**
- **ANONYMOUS: "Move Long Embellished Instruction. June 1981." IBM TECHNICAL DISCLOSURE BULLETIN, Bd. 24, Nr. 1A, 1. Juni 1981 (1981-06-01), Seiten 192-197, XP002239348 New York, US**
- **LEININGER B S ET AL: "MIL-STD-1750B, AS PROPOSED, AN UPDATE TO MIL-STD-1750A" PROCEEDINGS OF THE NATIONAL AEROSPACE AND ELECTRONICS CONFERENCE. (NAECON). DAYTON, OHIO, MAY 18 - 22, 1987, NEW YORK, IEEE, US, Bd. 3 CONF. 39, 18. Mai 1987 (1987-05-18), Seiten 852-857, XP000011884**
- **FURBER S B: "VLSI RISC Architecture and Organization" VLSI RISC ARCHITECTURE AND ORGANIZATION, NEW YORK, MARCEL DEKKER, US, 1989, Seiten 244-250, XP002211795 ISBN: 0-8247-8151-1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Prozessorsystem nach dem Oberbegriff des Anspruches 1, insbesondere ein Mikroprozessorsystem zur Verarbeitung von Telekommunikationsprotokollen.

Bei der Verarbeitung von Telekommunikationsprotokollen, wie z.B. Internet-Protokollen, Ethernet-Protokollen oder DSL-Rahmen, sind von dem jeweiligen Prozessorsystem in der Regel zwei typische Teilaufgaben zu erledigen. Die eine Teilaufgabe betrifft das Bewegen oder Verschieben von sogenannten Payloaddaten von einem Eingangspuffer zu einem Ausgangspuffer, wobei zum Teil mehrere Datenwörter umfassende Datenblöcke zu verschieben sind. Auch beim Speichern von Zustandsdaten, die bei jedem Funktionsaufruf und der damit verbundenen Veränderung des als Kontext bezeichneten Zustandsraums des Funktionsaufrufs gesichert werden, ist das Verschieben größerer Datenblöcke erforderlich. Die andere Teilaufgabe betrifft das Extrahieren von sogenannten Headerdaten aus dem gespeicherten Bitstrom, um sie anschließend weiterverarbeiten zu können.

Bei ARM-Prozessorsystemen ist bekannt, daß sie das Verschieben ganzer Datenblöcke zwischen einem Datenspeicher und einem Register im Zusammenhang mit einem Funktionsaufruf unterstützen. Diesbezüglich sei beispielsweise auf "ARM System Architecture", Steve Furber, Addison-Wesley, 1996 verwiesen. Der in ARM-Prozessoren verwendete Ladebefehl besitzt dabei folgende Syntax:

```
LDMIA      R1!, {R2-R9}
```

Mit diesem Befehl wird aus einem RAM-Speicher ein Datenblock in ein Registerfile mit den Registerbereichen R2-R9 geladen, wobei im vorliegenden Fall der Datenblock acht Datenwörter umfaßt. Da davon ausgegangen wird, daß jedes Wort in dem Speicher vier Bytes belegt, wird mit "R1!" anschließend die durch einen Adreßzeiger ("Adress Pointer") in einem Register R1 definierte aktuelle Adresse des Speichers um 4*8 = 32 Bytes erhöht.

Der Speicherbefehl besitzt analog die Syntax

```
STMIA      R2,  {R2-R9}
```

Mit diesem Befehl werden die in den Registerbereichen R2-R9 abgelegten Wörter von dem Registerfile in den Speicher geschrieben.

Die obigen Beispiele machen deutlich, daß mit diesen ARM-Befehlen lediglich Datenblöcke in der Größenordnung des Registerfiles verschoben werden können. Bei der Verarbeitung von Kommunikationsprotokollen ist jedoch auch das Verschieben von Datenblöcke erforderlich und wünschenswert, welche größer als das Registerfile sind, wobei dies insbesondere mit relativ geringem Aufwand, d.h. mit einer möglichst geringen Anzahl an Ausführungszyklen und mit einem minimalen Leistungsverbrauch, möglich sein soll.

Auch beim Extrahieren der oben genannten Headerdaten aus dem gespeicherten Bitstrom sind bisher nur Lösungen bekannt, welche diese Funktion nur mit einer relativ großen Anzahl aufeinanderfolgender Befehle, d.h. mit einer relativ hohen Anzahl an Ausführungszyklen und somit einem relativ hohen Leistungsverbrauch, ausführen können.

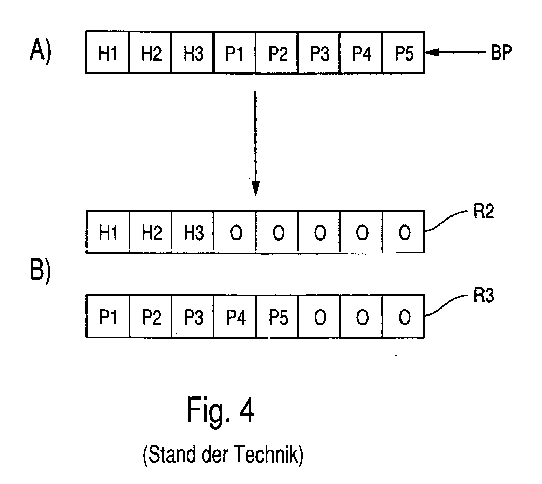

Eine dieser bekannten Lösungen soll nachfolgend kurz unter Bezugnahme auf Fig. 4 erläutert werden, wobei von einer byteorientierten Speicherorganisation ausgegangen wird, d.h. der Bitstrom ist in einzelne Bytes aufgeteilt, welche von einem Bytezeiger ("Byte Pointer") adressiert werden. Dabei weist der Bitstrom in der Regel mindestens ein Byte auf, in dem sowohl die bereits erwähnten Headerdaten als auch sogenannten Payloaddaten enthalten sind. Während die Headerdaten ausschließlich zu Steuerzwecken dienen und insbesondere redundante Informationen für einen sogenannten CRC-Check ("Cyclic Redundancy Check") aufweisen, enthalten die Payloaddaten die eigentlichen Kommunikationsinformationen, welche beispielsweise bei einer Internetnutzung gebührenpflichtig sein können. Die Aufteilung der Headerdaten und Payloaddaten auf ein Byte erfolgt abhängig von dem jeweils verwendeten Kommunikationsprotokoll. So enthält das in Fig. 4A gezeigte und von einem Bytezeiger BP adressierte Byte beispielsweise drei Header- oder Protokollbits H1-H3 sowie fünf Payloadbits P1-P5.

Für die weitere Verarbeitung dieses Bytes müssen die Headerbits und die Payloadbits voneinander getrennt abgespeichert werden. Diese Aufgabe kann beispielsweise durch die folgende Befehlsfolge realisiert werden:

```
LOAD    R1,   BP
LOAD    R2,   @R1
```

(fortgesetzt)

```
LOAD    R3,    R2
AND     R2,    11100000
SHIFT   R3,    Left #3
```

Mit dieser Befehlsfolge wird zunächst der Byte Pointer BP in ein Register R1 geladen. Anschließend wird der Inhalt des durch den Byte Pointer adressierten Bytes in ein Register R2 geladen und auf ein weiteres Register R3 übertragen. Durch die darauffolgende logische AND-Verknüpfung wird sichergestellt, daß in dem Register R2 nur noch die ersten drei Bits (von links) des durch den Byte Pointer adressierten Bytes enthalten sind, während durch die abschließende Verschiebeoperation erreicht wird, daß der Inhalt des Registers R3 um drei Stellen nach links verschoben wird, wodurch die Headerbits H1-H3 aus dem Register R3 verschwinden. In Fig. 4B sind die sich somit ergebenden Registerinhalte der Register R2 und R3 dargestellt, wobei ersichtlich ist, daß nunmehr in dem Register R2 ausschließlich die drei Header- oder Protokollbits H1-H3 enthalten sind, während das Register R3 lediglich die Payloadbits P1-P5 aufweist.

Die oben erläuterte Befehlsfolge umfaßt jedoch insgesamt fünf Einzelbefehle. Da mit jedem einzelnen Befehl der Speicherbedarf für den gesamten Programmcode, die Anzahl der Ausführungszyklen und somit auch der Leistungsbedarf steigt, besteht auch hier das Bedürfnis nach einer Realisierung der oben genannten Funktion mit geringerem Aufwand und einer geringeren Anzahl an Einzelbefehlen.

Der vorliegenden Erfindung liegt daher die Aufgabe zugrunde, ein Prozessorsystem vorzuschlagen, welches zur Verarbeitung von Telekommunikationsprotokollen geeignet ist und die dabei anfallenden Verarbeitungsschritte, insbesondere die Datenverschiebeoperationen, mit einem relativ geringen Aufwand, d.h. mit einer möglichst geringen Anzahl an Ausführungszyklen und mit einem minimalen Leistungsverbrauch, durchführt.

Diese Aufgabe wird erfindungsgemäß durch ein Prozessorsystem mit den Merkmalen des Anspruches 1 gelöst. Die Unteransprüche definieren jeweils vorteilhafte und bevorzugte Ausführungsformen der vorliegenden Erfindung.

Gemäß der vorliegenden Erfindung wird ein Datenverschiebebefehl derart definiert, daß der Prozessoreinheit durch den Datenverschiebebefehl eine Trenninformation vorgegeben wird, welche auf eine durch den Datenverschiebebefehl adressierte und in dem Datenspeicher gespeicherte Dateneinheit bezogen ist, wobei die Prozessoreinheit abhängig von dem Datenverschiebebefehl die adressierte Dateneinheit an einer der Trenninformation entsprechenden Trennstelle in eine erste Datenhälfte und eine zweite Datenhälfte auftrennt und die erste Datenhälfte in eine erste Zwischenspeichereinheit und die zweite Datenhälfte in eine zweite Zwischenspeichereinheit verschiebt.

Die Dateneinheit kann insbesondere ein in dem Datenspeicher des Prozessorsystems gespeichertes Datenbyte eines Kommunikations-Bitsstroms sein. Jede der beiden Zwischenspeichereinheiten kann auch gemäß dem zweiten Ausführungsbeispiel beispielsweise ein Register oder ein Ein-/Ausgabport sein.

Gemäß einer besonderen Ausgestaltung kann der Prozessoreinheit durch den Datenverschiebebefehl zudem eine Verschiebeinformation vorgegeben werden, so daß die Prozessoreinheit abhängig von dem Datenverschiebebefehl die erste Datenhälfte oder die zweite Datenhälfte in der ersten Zwischenspeichereinheit bzw. der zweiten Zwischenspeichereinheit um eine der Verschiebeinformation entsprechende Anzahl an Bitstellen verschiebt.

Gemäß der Erfindung wird somit ebenfalls ein sehr leistungsstarker Datenverschiebebefehl bereitgestellt, der es dem Prozessorsystem ermöglicht, ein Datenwort mit wenigen Ausführungszyklen und geringem Leistungsverbrauch aufzusplitten. Die Erfindung eignet sich somit sehr gut, um die gemäß einem Telekommunikationsprotokoll in einem Datenbyte enthaltenen Header- und Payloaddaten separat abzuspeichern und weiterzuverarbeiten.

Die zuvor erläuterten Datenverschiebebefehle können mit einem Wiederholungsbefehl kombiniert werden, wobei der Prozessoreinheit durch den Wiederholungsbefehl die Anzahl der Wiederholungen des Datenverschiebebefehls vorgegeben wird. Ist die Prozessoreinheit derart ausgestaltet, daß sie mehrere Programmabläufe parallel abarbeiten kann, kann der Prozessoreinheit mit dem Wiederholungsbefehl ein von der Prozessoreinheit parallel mit der Ausführung des Datenverschiebebefehls auszuführender weiterer Programmablauf vorgegeben werden.

Die vorliegende Erfindung wird nachfolgend unter Bezugnahme auf die beigefügte Zeichnung anhand bevorzugter Ausführungsbeispiele näher erläutert.

Fig. 1 zeigt ein Blockschaltbild eines Prozessorsystems gemäß einem bevorzugten Ausführungsbeispiel der vorliegenden Erfindung,

Fig. 2 zeigt eine Darstellung zur Erläuterung des Verschiebens eines Datenblocks gemäß einem ersten Ausführungsbeispiel der vorliegenden Erfindung,

Fig. 3 ist gestrichen worden,

Fig. 4A und 4B zeigen Darstellungen zur Erläuterung des Aufteilens eines Bytes eines Kommunikations-Bitstroms in Headerdaten und Payloaddaten gemäß dem Stand der Technik, und

Fig. 5A-5D zeigen Darstellungen zur Erläuterung des Aufteilens eines Bytes eines Kommunikations-Bitstroms in Headerdaten und Payloaddaten gemäß der vorliegenden Erfindung.

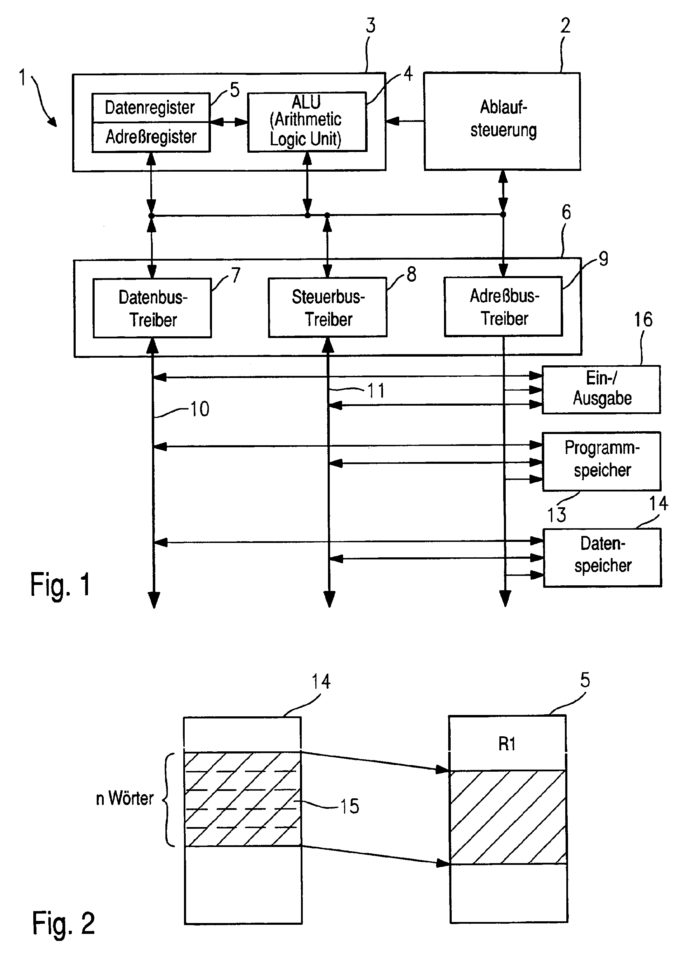

Das in Fig. 1 gezeigte Prozessorsystem umfaßt eine Mikroprozessoreinheit 1, die über einen Datenbus 10, einen Steuerbus 11 und einen Adreßbus 12 mit einem Programmspeicher 13, einem Datenspeicher 14 sowie einer Ein-/ Ausgabeeinheit 16 verbunden ist. Der Programmspeicher 13 enthält den abzuarbeitenden Programmcode, während in dem Datenspeicher 14 die jeweils benötigten Variablen stehen. Über den unidirektionalen Adreßbus 12 wird von der Mikroprozessoreinheit 1 die gewünschte Speicheradresse angegeben. Über den Steuerbus 11 wird hingegen festgelegt, ob ein Schreib- oder Lesevorgang durchgeführt werden soll, während über den bidirektionalen Datenbus 10 der Datenaustausch stattfindet.

Die Mikroprozessoreinheit 1 umfaßt im wesentlichen drei Funktionsblöcke, nämlich eine Ablaufsteuerung 2, eine Ausführungseinheit 3 und eine Busschnittstelle 6.

Die Ablaufsteuerung 2 umfaßt einen Befehlsdecoder und einen Programmzähler, wobei der Programmzähler die Befehle des auszuführenden Programms nacheinander aufruft, während der Befehlsdecoder anschließend die zur Ausführung der einzelnen Befehle erforderlichen Schritte auslöst.

Beim Starten eines Programms wird der Programmzähler auf die Startadresse gesetzt. Diese Adresse wird ausgehend von der Ablaufsteuerung 2 über einen Adreßbus-Treiber 9 der Busschnittstelle 6 und den Adreßbus 12 an den jeweils zu adressierenden Speicher übertragen. Bei einem auf dem von einem Steuerbus-Treiber 8 angesteuerten Steuerbus 11 übertragenen Lesesignal wird der Inhalt der von der übertragenen Adresse adressierten Speicherzelle oder Speichereinheit auf den von einem Datenbus-Treiber 7 angesteuerten Datenbus 10 ausgelesen und in dem Befehlsdecoder der Ablaufsteuerung 2 gespeichert. Der Befehlsdecoder löst dann die zur Befehlsdurchführung erforderlichen Operationen aus und setzt nach Ausführung eines Befehls den Programmzähler auf die Adresse des nächsten Befehls.

Die Ausführungseinheit 3 umfaßt als wesentliche Komponente eine ALU-Recheneinheit (Algorithmic Logic Unit) 4, welche die einzelnen arithmetischen und logischen Befehle verarbeitet. Die hierzu erforderlichen Operanden stehen in einer Registereinheit 5 oder werden über den in Fig. 1 gezeigten internen Bus angelegt. Die Registereinheit 5 umfaßt ein oder mehrere Daten- und Adreßregister.

Bei dem in Fig. 1 dargestellten Prozessorsystem handelt es sich insbesondere um ein Prozessorsystem, welches zur Verarbeitung von Telekommunikationsprotokollen, wie beispielsweise Internet- oder Ethernetprotokollen oder DSL-Rahmen, geeignet ist. Bei der Verarbeitung derartiger Telekommunikationsprotokolle sind, wie bereits erläutert worden ist, häufig größere Datenblöcke, welche die sogenannten Payloaddaten umfassen, zu verschieben, was durch einen in dem Programmspeicher 13 abgelegten Lade- oder Speicherbefehl veranlaßt wird.

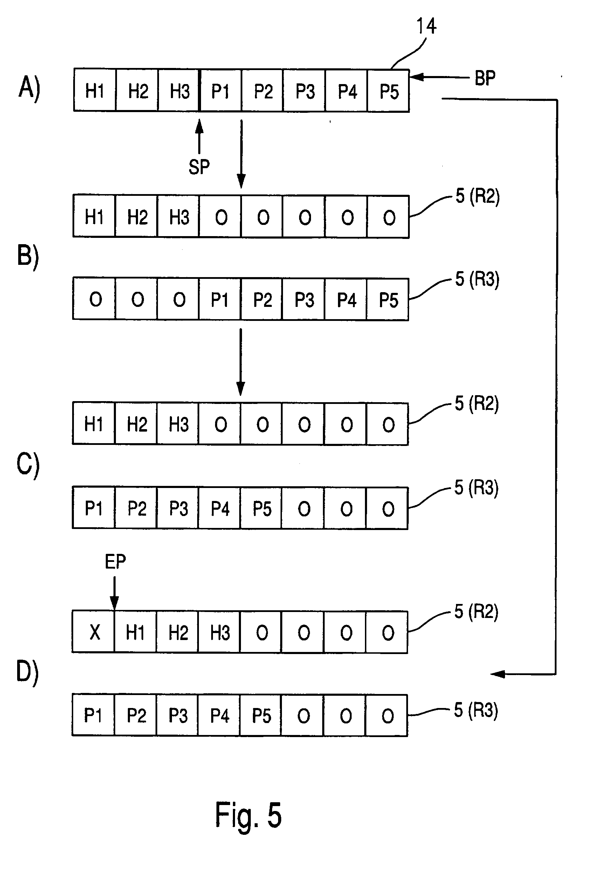

Nachfolgend soll unter Bezugnahme auf Fig. 5 die vorliegende Erfindung erläutert werden, wobei ein sehr leistungsfähiger Befehl vorgestellt wird, mit dessen Hilfe mit geringem Aufwand die Bits einer Dateneinheit, insbesondere eines Bytes, gesplittet und separat abgespeichert werden können. Diese Operation ist relativ häufig bei der Verarbeitung von Telekommunikationsprotokollen durch einen Mikroprozessor erforderlich.

Wie bereits unter Bezugnahme auf Fig. 4 erläutert worden ist, wird zunächst davon ausgegangen, daß im Datenspeicher ein Byte des Kommunikations-Bitstroms abgelegt ist, welches durch einen in einem bestimmten Register abgelegten Byte Pointer BP adressiert wird. Die in Fig. 1 gezeigte Prozessoreinheit 1 kann durch einen Speicherzugriff über den Datenbus 10 auf dieses Byte zugreifen, wobei dies gemäß dem folgenden LOAD2-Befehl erfolgt, der mit einem herkömmlichen LOAD- oder Ladebefehl kombiniert wird:

```
LOAD    R1,    BP
LOAD2   R2,    R3,    @R1,    SP
```

Zunächst wird der Byte Pointer BP durch den LOAD-Befehl in das Register R1 geladen. Anschließend wird der Prozessoreinheit 1 durch den LOAD2-Befehl eine Split- oder Trenninformation in Form des Parameters SP vorgegeben, welche die Splitposition in dem durch den Byte Pointer BP adressierten Byte bezeichnet (vgl. Fig. 5A). Durch diese Splitposition wird das adressierte Byte in zwei Hälften aufgeteilt, welche von der Prozessoreinheit 1 in die ebenfalls in dem LOAD2-Befehl angegebenen Register R2 und R3 gespeichert werden. Das in dem Datenspeicher 14 unter der durch den Byte Pointer BP definierten Adresse abgelegte Byte wird somit infolge des LOAD2-Befehls von der Prozessoreinheit wie in Fig. 5B gezeigt auf ein Register R2 und ein Register R3 aufgeteilt, wobei anschließend das Register R2 lediglich die Bits H1-H3 der auf die Splitposition SP bezogenen linken Bytehälfte und das Register R3 lediglich die Bits P1-P5 der rechten Bytehälfte enthält. Die Aufteilung des Bytes in eine linke und eine rechte Hälfte kann z.B. dadurch geschehen, daß von der Prozessoreinheit 1 eine entsprechende binäre Maske mit dem Byte einer logischen AND-Verknüpfung unterzogen wird. Wird die Ausführung um eine dem Parameter SP entsprechende Verschiebeoperation für das Register R3 erweitert, können die in Fig. 5C gezeigten Registerinhalte erhalten werden. Diese Verschiebe- oder Shift-Operation kann beispielsweise der in einer Prozessoreinheit üblicherweise vorgesehene Barrel-Shifter übernehmen, da der Barrel-Shifter bei einer Lade- oder Load-Operation nicht in Anspruch genommen wird.

Es kann auch eine zusätzliche Verschiebung für das Register R2 gewünscht sein. In diesem Fall kann der LOAD2-Befehl wie folgt abgewandelt werden:

LOAD2    R2,    R3,    @R1,    SP,    EP

Durch den LOAD2-Befehl wird der Prozessoreinheit 1 somit ein weiterer Parameter EP vorgegeben, welcher die Verschiebe- oder Einfügeposition für das Register R2 bezeichnet, so daß die in dem Register R2 gespeicherte Bytehälfte mit den Bits H1-H3 bei Ausführung dieses LOAD2-Befehls um eine durch den Parameter EP bezeichnete Anzahl von Bits verschoben wird und sich die in Fig. 5D gezeigten Registerinhalte ergeben.

Selbstverständlich kann dieser LOAD2-Befehl auch auf Ausgabeports angewendet werden, wobei bei dem nachfolgenden Beispiel ein durch den Parameter PORT bezeichneter Ausgabeport der Ein-/Ausgabeeinheit 16 an die Stelle des Registers R3 tritt:

LOAD2    R2,    PORT,    @R1,    SP,    EP

Mit diesem Befehl wird der Parameter SP direkt an den durch den Parameter PORT bezeichneten Ausgabeport geleitet, wo anschließend die Linksverschiebung der Bits P1-P5 um den Wert SP in Form einer portspezifischen Funktion durchgeführt wird.

Bei der Verwendung von Ports ist auch eine indizierte Adressierung des jeweiligen Ports wie folgt möglich, wobei in dem Register R3 der zu adressierende Port angegeben ist:

LOAD2    R2,    R3,    @R1,    SP,    EP

Insgesamt wird mit diesem LOAD2-Befehl somit ein sehr leistungsfähiger Befehl zum Splitten von bestimmten Dateneinheiten bereitgestellt, der das Splitten mit einer minimalen Anzahl an Ausführungszyklen und somit einem minimalen Leistungsverbrauch ermöglicht. Abgesehen von dem im LOAD2-Befehl für die einzelnen Parameter erforderlichen Steuerbits bleibt der Hardwareaufwand gegenüber der herkömmlichen Vorgehensweise (vgl. Beschreibung zu Fig. 4) nahezu unverändert. Das zuvor beschriebene Erfindung eignet sich bei der Verarbeitung von Telekommunikationsprotokollen somit hervorragend für das Aufsplitten von Headerbits H1-H3 und Payloadbits P1-P5 eines Bytes des Kommunikations-Bitstroms.

Der zum Splitten einer bestimmten Dateneinheit vorgesehene und zuvor beschriebene LOAD2-Befehl kann auch zum Verknüpfen oder "Mergen" von Bytehälften zu einem STORE2-Befehl erweitert werden:

STORE2    R2,    R3,    @R1,    SP,    EP

Mit diesem Befehl werden aus den Registern R2 und R3 zwei Bytehälften eines Bytes ausgelesen, wobei die Lage der beiden Bytehälften in den Registern R2 und R3 der Prozessoreinheit 1 in Form der zuvor erläuterten Parameter SP und EP angegeben wird. Die Prozessoreinheit 1 kann somit durch Zugriff auf die Register R2 und R3 diese beiden Bytehälften mit den Bits H1-H3 und P1-P5 auslesen und zu einem Byte zusammensetzen, welches unter einer durch den im Register R1 gespeicherten Byte Pointer bezeichneten Speicheradresse im Datenspeicher 14 abgespeichert wird. Dieser STORE2-Befehl kann jedoch nur auf Register angewendet werden. Zudem ist es unter Berücksichtigung des Aufwands vorteilhaft, den STORE2-Befehl auf die in Fig. 5C gezeigte Belegung der Register R2 und R3 anzuwenden.

Auch dieser LOAD2- oder STORE2-Befehl kann - wie oben anhand des LOADBLOCK-Befehls beschrieben worden ist - mit einem REPEAT-Befehl kombiniert und somit in eine Wiederholungsschleife eingebettet werden:

REPEAT    R1,    ANZAHL,        THREAD
LOAD2    R2,    R3,    @R1,    SP,    EP

Wird für den Load2-Befehl in der Prozessoreinheit 1 eine spezielle Hardwareeinheit vorgesehen, kann der LOAD2-Befehl wieder parallel zu einem anderen, durch den Parameter THREAD bezeichneten Programmablauf ausgeführt werden.

Durch den REPEAT-Befehl wird eine Wiederholungsschleife mit durch den Parameter ANZAHL definierten Wiederholungen gebildet. Der Wiederholungswert ANZAHL wird zunächst in das Register R1 geladen. Anschließend wird der LOAD2-Befehl einmal ausgeführt, der in dem Register R1 gespeicherte Wiederholungswert R1 dekrementiert (R1 = R1-1) und auf den durch den Parameter THREAD definierten Programmablauf umgeschaltet, um diesen zu starten oder auszuführen. Durch einen entsprechenden Befehl dieses durch den Parameter THREAD definierten Programmablaufs oder bei Vorliegen eines entsprechenden Interrupts wird wieder zurückgeschaltet oder zurückgesprungen und der LOAD2 Befehl erneut ausgeführt. Dieser Vorgang wiederholt sich solange, bis in dem Register R1 nur noch der Wert 0 gespeichert ist.

Besonders vorteilhaft ist es, wenn die in Fig. 1 gezeigte Prozessoreinheit derart ausgestaltet ist, daß sie gleichzeitig, d.h. parallel, unterschiedliche Programmabläufe abarbeiten kann. In diesem Fall würde mit dem oben beschriebenen REPEAT-Befehl der durch den Parameter THREAD bezeichnete Programmablauf gestartet bzw. ausgeführt werden, wobei der nachfolgende LOAD2-Befehl im bisherigen Programmablauf parallel dazu ausgeführt wird.

Bezugszeichenliste

| | |
|---|---|
| 1 | Mikroprozessor |
| 2 | Ablaufsteuerung |
| 3 | Ausführungseinheit |
| 4 | ALU-Einheit (Arithmetic Logic Unit) |
| 5 | Register |
| 6 | Busschnittstelle |
| 7 | Datenbus-Treiber |
| 8 | Steuerbus-Treiber |
| 9 | Adreßbus-Treiber |
| 10 | Datenbus |
| 11 | Steuerbus |
| 12 | Adreßbus |
| 13 | Programmspeicher |
| 14 | Datenspeicher |
| 15 | Datenblock |
| 16 | Ein-/Ausgabe-Schnittstelle |
| R2, R3 | Register |
| BP | Byte-Pointer |
| SP | Splitposition |
| EP | Einfügungsposition |
| n | Anzahl der Datenwörter des Datenblocks |

**Patentansprüche**

1. Prozessorsystem,
   mit einer Prozessoreinheit (1) zur Ausführung von in einem Programmspeicher (13) abgelegten Befehlen, und mit einem Datenspeicher (14), wobei von der Prozessoreinheit (12) bei Vorliegen eines entsprechenden Datenverschiebebefehls in dem Programmspeicher (13) Daten zwischen dem Datenspeicher (14) und einer Zwischenspeichereinheit (5,16) verschoben werden,
   **dadurch gekennzeichnet,**
   **dass** der Datenverschiebebefehl derart definiert ist, dass der Prozessoreinheit (1) durch den Datenverschiebebefehl eine Trenninformation (SP) vorgegeben wird, welche auf eine durch den Datenverschiebebefehl adressierte und in dem Datenspeicher (14) gespeicherte Dateneinheit bezogen ist, und
   **dass** die Prozessoreinheit (1) derart ausgestaltet ist, dass sie abhängig von dem Datenverschiebebefehl die adressierte Dateneinheit an einer der Trenninformation entsprechenden Trennstelle (SP) in einen ersten Dateneinheitsteil (H1-H3) und einen zweiten Dateneinheitsteil (P1-P5) auftrennt und der erste Dateneinheitsteil (H1-H3) in eine erste Zwischenspeichereinheit (5,R2;16) und der zweite Dateneinheitsteil (P1-P5) in eine zweite Zwischenspeichereinheit (5,R3;16) verschiebt.

**2.** Prozessorsystem nach Anspruch 1,
**dadurch gekennzeichnet,**
**dass** die Dateneinheit ein in dem Datenspeicher (14) gespeichertes Datenbyte ist.

**3.** Prozessorsystem nach Anspruch 1 oder 2,
**dadurch gekennzeichnet,**
**dass** der Datenverschiebebefehl derart definiert ist, dass der Prozessoreinheit (1) durch den Datenverschiebebefehl die zu adressierende Dateneinheit indirekt über den Inhalt eines durch den Datenverschiebebefehl definierten Registers (5) vorgegeben ist.

**4.** Prozessorsystem nach einem der Ansprüche 1-3,
**dadurch gekennzeichnet,**
**dass** der Datenverschiebebefehl derart definiert ist, dass der Prozessoreinheit (1) durch den Datenverschiebebefehl zudem eine Verschiebeinformation (EP) vorgegeben wird, und
**dass** die Prozessoreinheit (1) derart ausgestaltet ist, dass sie abhängig von dem Datenverschiebebefehl den ersten Dateneinheitsteil (H1-H3) oder den zweiten Dateneinheitsteil (P1-P5) in der ersten Zwischenspeichereinheit (5,R2; 16) bzw. der zweiten Zwischenspeichereinheit (5,R3;16) um eine der Verschiebeinformation (EP) entsprechende Anzahl an Bitstellen verschiebt.

**5.** Prozessorsystem nach einem der Ansprüche 1-4,
**dadurch gekennzeichnet,**
**dass** die erste und/oder zweite Zwischenspeichereinheit ein Register (5,R2,R3) ist.

**6.** Prozessorsystem nach einem der Ansprüche 1-5,
**dadurch gekennzeichnet,**
**dass** die erste und/oder zweite Zwischenspeichereinheit ein Port einer Ein-/Ausgabeeinheit (16) ist.

**7.** Prozessorsystem nach Anspruch 6,
**dadurch gekennzeichnet,**
**dass** der Datenverschiebebefehl derart definiert ist, dass der Prozessoreinheit (1) der jeweilige Port (16) indirekt über den Inhalt eines durch den Datenverschiebebefehl definierten Registers (5) vorgegeben ist.

**8.** Prozessorsystem nach einem der vorhergehenden Ansprüche,
**dadurch gekennzeichnet,**
**dass** der Datenverschiebebefehl in dem Programmspeicher (13) mit einem Wiederholungsbefehl kombiniert abgelegt ist, wobei der Prozessoreinheit (1) durch den Wiederholungsbefehl die Anzahl der Wiederholungen des Datenverschiebebefehls vorgegeben wird, dass die Prozessoreinheit (1) zur parallelen Abarbeitung mehrerer Programmabläufe ausgestaltet ist, und
**dass** der Wiederholungsbefehl derart definiert ist, dass der Prozessoreinheit (1) durch den Wiederholungsbefehl ein von der Prozessoreinheit (1) parallel mit der Ausführung des Datenverschiebebefehls auszuführender Programmablauf vorgegeben wird.

**9.** Prozessorsystem nach einem der vorhergehenden Ansprüche,
**dadurch gekennzeichnet,**
**daß** die Dateneinheit ein Datenbyte eines Kommunikations-Bitstroms ist und Header- und Payloaddaten enthält und die Trenninformation eine Stelle des Datenbytes angibt, an der Header- und Payloaddaten aneinander grenzen, so daß die Headerdaten dem ersten Dateneinheitsteil (H1-H3) und die Payloaddaten dem zweiten Dateneinheitsteil (P1-P5) zugeordnet sind.

**10.** Prozessorsystem nach einem der vorhergehenden Ansprüche,
**dadurch gekennzeichnet,**
**daß** der erste Dateneinheitsteil (H1-H3) eine erste Datenhälfte und der zweite Dateneinheitsteil (P1-P5) eine zweite Datenhälfte ist.

**Claims**

**1.** Processor system, with a processor unit (1) for executing commands stored in a program memory (13), and with a data memory (14), data being shifted by the processor unit (12) between the data memory (14) and a temporary storage unit (5, 16) when a corresponding data shifting command is present in the program memory (13), **characterized in that** the data shifting command is defined in such a way that an item of separating information (SP) which is related to a data unit addressed by the data shifting command and stored in the data memory (14) is prescribed to the processor unit (1) by the data shifting command, and **in that** the processor unit (1) is designed in such a way that it acts according to the data shifting command by dividing the addressed data unit at a separating point (SP) corresponding to the separating information into a first data unit part (H1-H3) and a second data unit part (P1-P5) and shifts the first data unit part (H1-H3) into a first temporary storage unit (5, R2; 16) and the second data unit part (P1-P5) into a second temporary storage unit (5, R3; 16).

2. Processor system according to Claim 1, **characterized in that** the data unit is a data byte stored in the data memory (14).

3. Processor system according to Claim 1 or 2, **characterized in that** the data shifting command is defined in such a way that the data unit to be addressed is prescribed to the processor unit (1) by the data shifting command indirectly via the content of a register (5) defined by the data shifting command.

4. Processor system according to one of Claims 1-3, **characterized in that** the data shifting command is defined in such a way that an item of shifting information (EP) is additionally prescribed to the processor unit (1) by the data shifting command, and **in that** the processor unit (1) is designed in such a way that it acts according to the data shifting command by shifting the first data unit part (H1-H3) or the second data unit part (P1-P5) in the first temporary storage unit (5, R2; 16) or the second temporary storage unit (5, R3; 16) by a number of bit positions corresponding to the shifting information (EP).

5. Processor system according to one of Claims 1-4, **characterized in that** the first and/or second temporary storage unit is a register (5, R2, R3).

6. Processor system according to one of Claims 1-5, **characterized in that** the first and/or second temporary storage unit is a port of an input/output unit (16).

7. Processor system according to Claim 6, **characterized in that** the data shifting command is defined in such a way that the respective port (16) is prescribed to the processor unit (1) indirectly via the content of a register (5) defined by the data shifting command.

8. Processor system according to one of the preceding claims, **characterized in that** the data shifting command is stored in the program memory (13) combined with a repetition command, with the number of repetitions of the data shifting command being prescribed to the processor unit (1) by the repetition command, **in that** the processor unit (1) is designed for the parallel running of a plurality of program sequences, and **in that** the repetition command is defined in such a way that a program sequence to be executed by the processor unit (1) in parallel with the execution of the data shifting command is prescribed to the processor unit (1) by the repetition command.

9. Processor system according to one of the preceding claims, **characterized in that** the data unit is a data byte of a communication bit stream and contains header and payload data, and the separating information indicates a separating point of the data byte at which header and payload data are adjacent to one another, so that the header data are assigned to the first data unit part (H1-H3) and the payload data are assigned to the second data unit part (P1-P5).

10. Processor system according to one of the preceding claims, **characterized in that** the first data unit part (H1-H3) is a first data half and the second data unit part (P1-P5) is a second data half.

**Revendications**

1. Système de processeur
comprenant une unité processeur (1) pour l'exécution d'instructions stockées dans une mémoire de programmes (13) et comprenant une mémoire de données (14), des données étant décalées entre la mémoire de données (14) et une unité de mémoire temporaire (5, 16) par l'unité processeur (12) lors de la présence d'une instruction de décalage de données correspondante dans la mémoire de programmes (13)

**caractérisé en ce que**

l'instruction de décalage de données est définie de telle façon qu'une information de séparation (SP) est délivrée à l'unité processeur (1) par l'instruction de décalage de données, elle se rapporte à une unité de données adressée par l'instruction de décalage de données et mémorisée dans la mémoire de données (14)

et que l'unité processeur (1) est réalisée de telle façon qu'elle sépare, en fonction de l'instruction de décalage de données, l'unité de données adressée en une première unité de données partielle (H1-H3) et une deuxième unité de données partielle (P1-P5) à une position de séparation (SP) correspondant à l'information de séparation et décale la première unité de données partielle (H1-H3) dans une première unité de mémoire temporaire (5, R2 ; 16) et la deuxième unité de données partielle (P1-P5) dans une deuxième unité de mémoire temporaire (5, R3 ; 16).

2. Système de processeur selon la revendication 1,
   **caractérisé en ce que**
   l'unité de données est un octet de données mémorisé dans la mémoire de données (14).

3. Système de processeur selon la revendication 1 ou 2,
   **caractérisé en ce que**
   l'instruction de décalage de données est définie de telle façon que l'unité de données à adresser est donnée indirectement à l'unité processeur (1) par l'instruction de décalage de données via le contenu d'un registre (5) défini par l'instruction de décalage de données.

4. Système de processeur selon une des revendications 1-3,
   **caractérisé en ce que**
   l'instruction de décalage de données est définie de telle façon qu'une information de décalage (EP) est donnée, de plus, à l'unité processeur (1) par l'instruction de décalage de données et que
   l'unité processeur (1) est réalisée de telle façon qu'elle décale, en fonction de l'instruction de décalage de données, la première unité de données partielle (H1-H3) ou la deuxième unité de données partielle (P1-P5) dans la première unité de mémoire temporaire (5, R2 ; 16) respectivement dans la deuxième unité de mémoire temporaire (5, R3 ; 16) d'un nombre de positions de bit correspondant à l'information de décalage (EP).

5. Système de processeur selon une des revendications 1-4,
   **caractérisé en ce que**
   la première et/ou la deuxième unité de mémoire temporaire est un registre (5, R2, R3).

6. Système de processeur selon une des revendications 1-5,
   **caractérisé en ce que**
   la première et/ou la deuxième unité de mémoire temporaire est un port d'une unité d'entrée/sortie (16).

7. Système de processeur selon la revendication 6,
   **caractérisé en ce que**
   l'instruction de décalage de données est définie de telle façon que le port correspondant (16) est donné indirectement à l'unité processeur (1) via le contenu d'un registre (5) défini par l'instruction de décalage de données.

8. Système de processeur selon l'une quelconque des revendications précédentes
   **caractérisé en ce que**
   l'instruction de décalage de données est stockée de façon combinée avec une instruction d'itération dans la mémoire de programmes (13), le nombre d'itérations de l'instruction de décalage de données étant donné à l'unité processeur (1) par l'instruction d'itération,
   que l'unité processeur (1) est réalisée pour une exécution parallèle de plusieurs programmes, et que
   l'instruction d'itération est définie de telle façon qu'un programme à exécuter par l'unité processeur (1) parallèlement à l'exécution de l'instruction de décalage de données est donné à l'unité processeur (1) par l'instruction d'itération.

9. Système de processeur selon l'une quelconque des revendications précédentes
   **caractérisé en ce que**
   l'unité de données est un octet de données d'un flux de bits de communication et contient des données header et payload et l'information de séparation délivre une position d'octet de données à laquelle les données header et payload sont séparées les unes des autres de telle façon que les données header sont associées à la première unité de données partielle (H1-H3) et les données payload sont associées à la deuxième unité de données partielle (P1-P5).

**10.** Système de processeur selon l'une quelconque des revendications précédentes **caractérisé en ce que**
la première unité de données partielle (H1-H3) est une première moitié de données et la deuxième unité de données partielle (P1-P5) est une deuxième moitié de données.

Fig. 1

Fig. 2

A)

| H1 | H2 | H3 | P1 | P2 | P3 | P4 | P5 | ← ——— BP |

B)

| H1 | H2 | H3 | O | O | O | O | O | ⟋ R2 |

| P1 | P2 | P3 | P4 | P5 | O | O | O | ⟋ R3 |

# Fig. 4

(Stand der Technik)

14

A)  | H1 | H2 | H3 | P1 | P2 | P3 | P4 | P5 |  ← BP

SP

| H1 | H2 | H3 | O | O | O | O | O |  — 5 (R2)

B)

| O | O | O | P1 | P2 | P3 | P4 | P5 |  — 5 (R3)

| H1 | H2 | H3 | O | O | O | O | O |  — 5 (R2)

C)

| P1 | P2 | P3 | P4 | P5 | O | O | O |  — 5 (R3)

EP

| X | H1 | H2 | H3 | O | O | O | O |  — 5 (R2)

D)

| P1 | P2 | P3 | P4 | P5 | O | O | O |  — 5 (R3)

Fig. 5